# EUROPEAN PATENT APPLICATION

(11) **EP 3 700 143 A1**
(43) Date of publication of application: **26.08.2020**
(21) Application number: 19158227.9
(22) Date of filing: 20.02.2019
(51) Int. Cl.: H04L 12/28

(54) **SYSTEM AND METHOD FOR CONTROLLING A HOME APPLIANCE**

(71) Applicant: BSH Hausgeräte GmbH, 81739 München (DE)
(72) Inventor: Kochan, Alex, 83358 Seebruck (DE); Losbichler, Matthias, 84574 Taufkirchen (DE); Burghardt, Stefan, deceased (DE); Freudigmann, Hans-Arndt, 72072 Tübingen (DE); Leonhardt, Ronny, 70839 Gerlingen (DE); Stuke, Bernd, 71229 Leonberg (DE)

(57) **Abstract**

The invention relates to a system and a method for controlling a home appliance. The system comprises
- the home appliance (20) with a sensor (22), a first communication module (23) and a first processor (24), wherein the first processor (24) is adapted to determine a status of the home appliance (20) based on data provided by the sensor (22),
- an end device (30) comprising a display (31), a second processor (33) and a second communication module (32) wherein the end device (30) is adapted to display the status of the home appliance (20) on the display (31),
wherein the first communication module (23) and the second communication module (32) are communicatively connected to each other, wherein the end device (30) is adapted to allow the user to send a control command from the end device (30) to the home appliance (20) and the sensor (22) is adapted to measure a volatile organic compound inside the home appliance (20).

## Description

### Background of the invention

The present invention relates to a system for controlling a home appliance comprising the home appliance with a sensor, a first communication module and a first processor, wherein the first processor is adapted to determine a status of the home appliance based on data provided by the sensor and an end device comprising a display, a second processor and a second communication module, wherein the end device is adapted to display the status of the home appliance on the display, wherein the first communication module and the second communication module are communicatively connected to each other. The invention further relates to a method for controlling a home appliance which assists a user to control a home appliance which comprises a step of capturing data from the environment of the home appliance by a sensor placed inside the home appliance, processing of data retrieved from the sensor by a first processor and establishing a communicative connection between a first communication module of the home appliance and a second communication module of an end device.

### State of the art

Households typically are equipped with a plurality of household appliances such as e.g. a coffee machine, a refrigerator, an oven, a vacuum cleaner etc. The home appliances can be used for a plurality of purposes like keeping foodstuffs at a particular temperature, preparing drinks or for cleaning the house etc. In modern, networked households the home appliances are connected wirelessly with external devices for the purpose of automation of the household environment. Systems for wireless monitoring a state of a domestic appliance are known from the state of the art.

The patent application WO 2017/ 184 888 A1 discloses grinders, analyzers and related technologies wherein the grinders can hold foodstuff that is periodically ground. The analyzers can analyze the foodstuff to determine information about the state of the foodstuff. Algorithms can be used to determine how to process the foodstuff, how to use the foodstuff, and/or when to discard the foodstuff. The grinder can be a portable, rechargeable electric coffee grinder configured to monitor the freshness of the coffee beans. When coffee beans become stale, they can be discarded and the coffee grinder can be refilled with fresh coffee beans.

The patent application WO 2015/ 036 229 A1 discloses a system for monitoring a current operational state of a program-controlled domestic appliance while the domestic appliance carries out an operating process, which system comprises a retrofit module and a communication device which is separate from the retrofit module and the domestic appliance. The retrofit module comprises a fastening arrangement for releasable fastening of the retrofit module on an outer face of an appliance housing of the domestic appliance, a data exchange unit for wireless communication with the communication device and a sensor arrangement which is designed to detect at least one emission signal from a component of the domestic appliance carrying out the operating process of the domestic appliance, said signal penetrating outwards through the appliance housing. The system is designed to determine the current operational state of the domestic appliance with the aid of detected measured values of the emission signal and to output said state by means of the communication device. The sensor arrangement of the retrofit module has a magnetic field sensor which is designed for detecting a magnetic field, generated by a drive motor as component of the domestic appliance, as emission signal.

Presented solutions do not provide an easy, convenient and intuitive method of controlling a home appliance.

### The aim of the invention

It is the object of the present invention to provide a further development with an advantage over the state of the art and provide a system for controlling a home appliance by the end device which is adapted to assist a person in carrying out plurality of tasks in a household in an easy, intuitive and convenient way.

### Summary of the invention

The object is solved by a system for controlling a home appliance whereby the end device is adapted to allow the user to send a control command from the end device to the home appliance and the sensor is adapted to measure a volatile organic compound inside the home appliance.
The system for controlling a home appliance comprises an end device and a home appliance. There is a large variety of such home appliances e.g. coffee machine, dishwasher, vacuum cleaner etc. The home appliance is in wireless connection with the end device what means that this devices are working in the network without being connected each other by wires.
The home appliance comprises a sensor, a first communication module and a first processor. The sensor is configured to capture data from a sensed region of an environment of the home appliance. The first processor is adapted to determine a status of the home appliance based on data provided by the sensor. The inputs from the sensor are sent to the first processor of the home appliance an further to the end device via the first communication module.
The sensor is adapted to measure a volatile organic compound inside the home appliance. The sensor is an electronic device which is sensitive to smell, temperature, volatile organic compound or the like, that measures and transmits the signal to a first processor in order to communicate it to the end device. The sensor is placed inside the body of the home appliance.
The end device comprises a display, a second processor and a second communication module. The end device is a device which is configured to receive the data from the home appliance which are processed by the second processor. The end device is able to control the home appliance based on the received data. The end device is a smartphone, tablet or different remote electronic device which controls the home appliance e.g. a coffee machine, refrigerator, vacuum cleaner or other appliance, using the second communication module. The home appliance and the end device are in an effective interaction by the first communication module and the second communication module which are communicatively connected to each other via wireless communication connection (e.g. Wi-Fi, Bluetooth, WLAN etc.). By the provision of a communication modules an effective interaction of home appliance and the end device is made possible. The end device is equipped with the display on which the status of the home appliance is displayed. The end device is adapted to allow the user to send a control command from the end device to the home appliance. The control command can be given in order to transfer the home appliance form a sleep mode into an active mode and also in order to perform the particular operations or processes by the home appliance with specific parameters which were previously determined by the user.

In an embodiment of the invention the home appliance is a coffee machine and the sensor is adapted to measure a freshness of coffee beans or coffee powder or the sensor is adapted to measure a level of deterioration of residuals.
The sensor is placed inside the body of the home appliance which is a coffee machine. Some parameters have a significant influence on the taste of the coffee and also a great influence on the brewing process such as the storing time of the coffee beans inside the bean container. The coffee beans lose their flavor and aroma over time which correlates with the age of the coffee beans. For this reason sensing the intensity of the aroma gives the user an information about the beans quality which directly influences the coffee quality. A sensor which is applied to sense the beans quality should be positioned inside the bean container or near the grinder. The positive effect is that the quality of the beverages is kept at the same high level and the user satisfaction increases.
The sensor can be also placed inside the body of the coffee machine in the vicinity of the drip tray. After a brewing process, the residuals accumulate in a drip tray. A drip tray is a part of the coffee machine in which some residuals of the ground coffee and waste water accumulates. For the functionality and hygiene reasons the drip tray should be cleaned periodically by the user. For this purpose coffee machines are equipped with a cycle counting device which informs the user about the necessity of cleaning. In this situation the cleaning is performed only on the basis of the cycles number regardless of the time of the last cleaning. If the coffee is prepared only from time to time it can cause hygiene problems because the residuals can rot over time. The sensor is able to measure a level of deterioration of the residuals in order to inform the user about the necessity of emptying the drip tray. The positive effect is that the user knows that residuals should be disposed.

For this reason a sensor for detecting the amount of a volatile organic compound is placed inside the coffee machine body in the vicinity of the drip tray. The positive effect of placing the sensor in the vicinity of the drip tray is that no matter of the brewing cycles number the sensor is able to sense that the drip tray should be drained and cleaned. The information about the necessity of performing maintenance is immediately processing by the first processor and send to the end device via the first communication module.

In another embodiment of the invention the home appliance is a cleaning robot and the sensor is adapted to measure a status of dust in a dust container of the cleaning robot.
The cleaning robot is an autonomous vacuum cleaner which can clean autonomously without users control. The cleaning robot is equipped with a rechargeable battery pack, a self-navigation system and sensors for detecting objects like walls or stairs, so a minimal human input is required. Except sensors for detecting the obstacles the cleaning robot is equipped with sensor for measuring the amount of a volatile organic compound inside the vacuum cleaner. The sensor is provided inside the vacuum cleaner dust container or in the vicinity of the dust container in order to detect that the container is full of dust and needs to be emptied. The sensor indicates also the necessity of emptying of the dust container even if it is not full but in the situation in which the dust stays inside the dust container for too long and there is a risk of mold, bacteria and microorganisms development. It can cause not only bad smell but also can be a risk for the users health. The positive effect of providing such sensor inside the vacuum cleaner is that the comfort of using such home appliance is increasing.

In another embodiment of the invention the home appliance is a refrigerator and the sensor is adapted to measure a freshness of food items stored in the refrigerator.
The refrigerator is a device for keeping food stuff in appropriate temperature which allows to store the food for an extended period of time in comparison to storage the food without such device. The sensor is placed in the chamber of the refrigerator in which the food is placed. The purpose of the sensor inside the refrigerator chamber is to detect and measure the amount of the volatile organic compound and based on this parameter detect if the food hasn't been keep inside the refrigerator too long. The positive effect is that the customer is informed about the condition and quality of the storage food inside the refrigerator.

The catalogue of home appliances in which the use of the sensor is reasonable is not limited to the coffee machine, cleaning robot or refrigerator but also can be used in other home appliances.

In a different embodiment of the invention, the end device is adapted to allow the user to choose a favourite home appliance. Many home appliances are provided in a household which are working in the same network and are designed in such a way that they can communicate via communication modules with an end device. The end device is able to receive data from home appliances and also can control the home appliances through a control commands sending via the second communication module. Some of home appliances are used more frequently than the others. For this reason the user is allowed to choose a favourite home appliance.

Advantageously, the end device is adapted to allow the user to set a favourite settings of the home appliance. The favourite settings of the home appliance which previously have been chosen by the user are saved in an end device. The settings in case of coffee machine can relate to the temperature, volume, coffee strength and kind of beverage.

In the preferred embodiment of the invention the display of the end device comprises multiple screens and one of the screen is a home screen. The end device can be e.g. a smartphone which comprises a display with a multiple screens for shortcuts related to different applications. The user can switch between the screens of the end device in an easy way.

Advantageously, a control element of the favourite home appliance is displayed on the home screen of the end device. The control element can be e.g. a widget which is a simple application extension that is a part of the end device. Widgets come in all shapes and sizes, are customizable and reside on any available screen for quick access. This control element provides the user with a quick access to information about the home appliance without requiring to open the app that manages the information. An example is the weather widget, which provides the user a quick view of upcoming weather forecast without opening the weather application. Except receiving information form home appliances, the control element is designed in such a way that it is able to send a control command to the home appliance in order to take desired actions.

The positive effect is that a minimum steps has to be taken to activate desired functions of the home appliance.

In the preferred embodiment of the invention the end device is adapted to display the control element of the home appliance on the display. The home appliance status and the status changes are displayed on the display in a form of a control element which can be configured by the user. The control element displays the status of the home appliance and also is able to send a control command to the home appliance
By touching the control element the user can send a control command to the home appliance. The control element is e.g. a widget which contains a set of previously selected settings of the home appliance e.g. kind of coffee, the coffee volume, temperature etc. The end device display can be a touch-sensitive screen.

The object of the invention is also solved by a method for controlling a home appliance, whereby the end device is adapted to allow the user to send a control command from the end device to the home appliance and the sensor is adapted to measure a volatile organic compound inside the home appliance. The method relies on capturing data from the environment of the home appliance e.g. sensing the presence of the volatile organic compound inside the home appliance. For this reason at least one sensor is provided inside the home appliance. The data retrieved by the sensor are sent to the first processor of the home appliance and next to the end device by the first communication module of the home appliance. The end device is equipped with the second communication module through which the end device communicates with the home appliance. The end device and the home appliance are communicatively connected to each other and the user is able to send a control command from the end device to the home appliance. An effective assistance of the user in the household is possible by the method. The positive effect is that controlling of home appliance operation is simple, intuitive and effective.

Advantageously, the home appliance is operated by the user through the end device. The positive effect is that a controlling of the operation of the home appliance is performed in a remote way and allows the user to limit the number of operations at the home appliance and save time which has to be spent for choosing settings of the appliance.

### Brief description of the figures

Further details of embodiments of the invention together with additional objects and corresponding advantages will be best understood from the following description of specific embodiments and in connection with the accompanying drawings.

In the drawing:

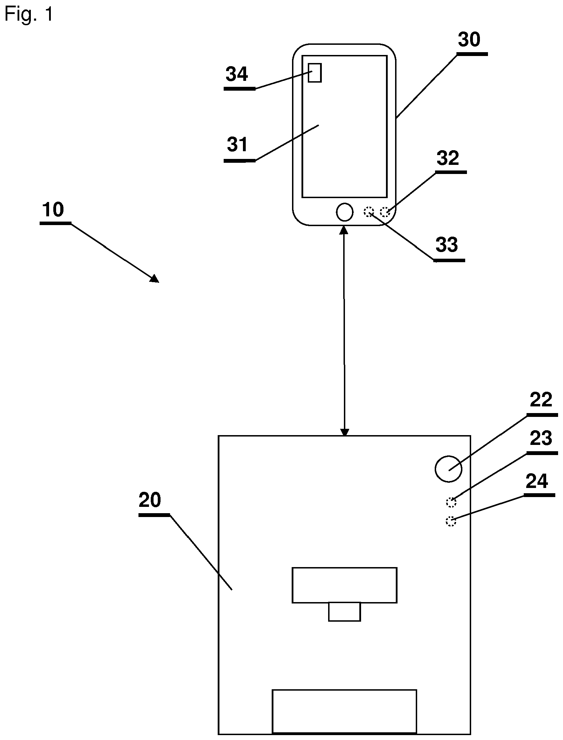

- Fig. 1: shows a schematic view of the home appliance and the end device communicatively connected to each other.

### Detailed description of the invention

With reference to the attached drawing, the technical contents and detailed description of the present invention are describe thereinafter according to a preferable embodiment being not used to limit its executing scope. Any equivalent variation and modification made according to the appended claims is also covered by the claims claimed by the present invention.

In the following description of the preferred embodiments of the present invention, similar identical reference numbers designate identical or comparable components.

Fig. 1 shows an end device 30, which can be used in particular for the control of home appliance 20 in a household. The end device 30 is a smartphone containing a display 31 which is a touch-sensitive screen. The display 31 comprises multiple screens and one of the screen is a home screen (not shown in the figure). The display 31 is adapted to display the control element 34 of the home appliance 20. The control element 34 is displayed as a widget which comprise data about the home appliance 20. The control element 34 is an element which provides a quick access to the home appliance 20 for the user. The control element 34 is able not only to display information about the status of the home appliance 20 but also the user is able to control the home appliance 20 by this control element 34 which sends a control command to the home appliance 20. The control command is a command which is released by touching the control element 34 in which contains all home appliance 20 settings and can be sent to the home appliance 20 by touching the control element 34.

The home appliance 20 is a coffee machine equipped with a sensor 22, a first processor 24 and a first communication module 23. The sensor 22 is built inside the home appliance 20 body to sense the desired parameters of the home appliance 20. The sensor 22 transmits signals to the first processor 24 and next via the first communication module 23 wirelessly to the end device 30. The signals inform the user that some actions e.g. cleaning should be performed by the user in order to provide a faultless operation of the home appliance 20.

The end device 30 is equipped with a second processor 33 and a second communication module 32. The second processor 33 is provided to receive signals from the home appliance 20. The user is informed about the status or status changes of the home appliance 20. The end device 30 is also provided with a control element 34 which is a part of an application (not shown in the figure) dedicated to store data from different home appliances. For each home appliance the respective control element 34 is provided. By touching the control element 34 a control command is sent to the home appliance 20. The control command send from the end device 30 by which the home appliance 20 gets an information about the desired process parameters.

The present invention enables to receive an information about the home appliance based on home appliance sensors and to control such home appliance by the end device in an easy, intuitive and convenient way by the user.

### LIST OF REFERENCE SIGNS

- 10: system

- 20: home appliance
- 22: sensor
- 23: first communication module
- 24: first processor

- 30: end device
- 31: display
- 32: second communication module
- 33: second processor
- 34: control element

## Claims

1. A system (10) for controlling a home appliance (20) comprising:
- the home appliance (20) with a sensor (22), a first communication module (23) and a first processor (24), wherein the first processor (24) is adapted to determine a status of the home appliance (20) based on data provided by the sensor (22),
- an end device (30) comprising a display (31), a second processor (33) and a second communication module (32) wherein the end device (30) is adapted to display the status of the home appliance (20) on the display (31),
wherein the first communication module (23) and the second communication module (32) are communicatively connected to each other **characterized in that** the end device (30) is adapted to allow the user to send a control command from the end device (30) to the home appliance (20) and the sensor (22) is adapted to measure a volatile organic compound inside the home appliance (20).

2. The system (10) according to any of the preceding claims, **characterized in that** the home appliance (20) is a coffee machine and the sensor (22) is adapted to measure a freshness of coffee beans or coffee powder or the sensor (22) is adapted to measure a level of deterioration of residuals.

3. The system (10) according to any of the preceding claims from 1 to 2, **characterized in that** the home appliance (20) is a cleaning robot and the sensor (22) is adapted to measure a status of dust in a dust container of the cleaning robot.

4. The system (10) according to any of the preceding claims from 1 to 2, **characterized in that** the home appliance (20) is a refrigerator and the sensor (22) is adapted to measure a freshness of food items stored in the refrigerator.

5. The system (10) according to any of the preceding claims, **characterized in that** the end device (30) is adapted to allow the user to choose a favourite home appliance (20).

6. The system (10) according to any of the preceding claims, **characterized in that** the end device (30) is adapted to allow the user to set a favourite settings of the home appliance (20).

7. The system (10) according to any of the preceding claims, **characterized in that** the display (31) of the end device (30) comprises multiple screens and one of the screen is a home screen.

8. The system (10) according to any of the preceding claims, **characterized in that** a control element (43) of a favourite home appliance (20) is displayed on the home screen of the end device (30).

9. The system (10) according to any of the preceding claims, **characterized in that** the end device (30) is adapted to display the control element (34) of the home appliance (20) on the display (31).

10. A method for controlling a home appliance (20) which assists a user to control a home appliance (20), wherein the method comprises the following steps:
- capturing data from the environment of the home appliance (20) by a sensor (22) placed inside the home appliance (20),
- processing of data retrieved from the sensor (22) by a first processor (24),
- establishing a communicative connection between a first communication module (23) of the home appliance (20) and a second communication module (32) of an end device (30),
**characterized in that** the end device (30) is adapted to allow the user to send a control command from the end device (30) to the home appliance (20) and the sensor is adapted to measure a volatile organic compound inside the home appliance (20).

11. The method according to claim 10, **characterized in that** the home appliance (20) is operated by the user through the end device (30).
